# EUROPÄISCHE PATENTSCHRIFT

(11) **EP 2 383 547 B1**
(45) Veröffentlichungstag und Bekanntmachung des Hinweises auf die Patenterteilung: **22.03.2017**
(21) Anmeldenummer: 10161663.9
(22) Anmeldetag: 30.04.2010
(51) Int. Cl.: G01F 1/075, G01F 1/115, G01F 15/00, G01F 15/06

(54) **Fluidzähler**
Fluid counter
Compteur de fluide

(43) Veröffentlichungstag der Anmeldung: 02.11.2011
(73) Patentinhaber: Elster GmbH, 55252 Mainz-Kastel (DE)
(72) Erfinder: Temme, Guido, 49186 Bad Iburg (DE)
(74) Vertreter: Zenz Patentanwälte Partnerschaft mbB

(56) Entgegenhaltungen:
- EP-A1- 0 220 595
- WO-A1-97/16706
- DE-A1-102005 016 374
- JP-A- 2005 321 214
- RU-C1- 2 131 115
- DATABASE WPI Week 199724 Thomson Scientific, London, GB; AN 1997-272228 XP002601919 -& DK 174 608 B1 (HANS JOERGEN JENSEN PANDRUP A [DK] HANS JOERGEN JENSEN PANDRUP AS [DK]) 21. Juli 2003 (2003-07-21)

## Beschreibung

Die Erfindung betrifft einen Fluidzähler. Insbesondere betrifft die Erfindung eine Zähleinrichtung für Fluidströme, zum Beispiel Gas- oder Flüssigkeitsströme, wobei ein Gehäuse der Zähleinrichtung von einem Fluid durchströmbar ist. In einer Wand des Gehäuses ist eine Einstülpung in das Gehäuseinnere ausgebildet, welche wenigstens abschnittsweise als Lagerkörper geformt ist. Ein magnetischer Rotationskörper, der im Gehäuseinneren auf dem Lagerkörper drehbar gelagert ist, kann durch den im Inneren des Gehäuses bewegten Fluidstroms zur Rotation auf dem Lagerkörper angetrieben werden.

Ein Fluidzähler der eingangs genannten Art ist beispielsweise aus der DE 4114978 A1, WO 97/16706 A1 oder DK 96 996 A bekannt.

Ein Magnetfeldsensor ist bei dieser Einrichtung zur Detektion eines Magnetfeldes des magnetischen Rotationskörpers angeordnet. Die Signale des Magnetfeldsensors dienen als Maß für die Rotation des Rotationskörpers und damit als Maß für den durch das Gehäuse strömenden Volumenstrom.

Bei diesem bekannten Fluidzähler ist im Gehäuseinneren ein Flügelrad angeordnet, dass einen mit dem Flügelrad umlaufenden Permanentmagneten trägt. Im Bereich der Drehachse, welche in der Einstülpung in das Gehäuseinnere liegt, also einem von Fluidstrom nicht durchströmten Raum, ist ein Sensor angeordnet, der beim Vorbeilauf des Flügelrads auswertbare Impulse erzeugt.

Derartige Fluidzähler dienen üblicherweise zur Ermittlung des Verbrauchs eines Fluidvolumens zum Zwecke der Abrechnung vom Lieferanten an den Verbraucher. Es besteht seit Langem das Bestreben, derartige Systeme einfacher ablesbar und die Verbrauchsdaten leichter auswertbar zu machen und gleichzeitig die Manipulationssicherheit für solche Systeme zu erhöhen. Dennoch muss jederzeit die Sicherheit des Systems gewährleistet sein, insbesondere wenn der Strom potenziell gefährlicher Fluide, wie zum Beispiel brennbarer Gase, gemessen werden soll.

Es ist daher jederzeit sicherzustellen, dass der mit dem Fluid gefüllte Innenraum eines Gaszählers von den Zählwerkskomponenten derart entkoppelt oder jedenfalls dicht abgeschlossen ist, dass sich im Zählwerksbereich keine Leckagen ergeben können. Der Zähler der Eingangs genannten Art trennt aus diesem Grund den Innen- und Außenbereich des Zählers durch eine Einstülpung im Gehäuse, so dass sich aus der Wandung des Gehäuses ein einseitig geschlossener Zylinder in das Gehäuseinnere erstreckt, dessen Inneres mit dem Außenraum des Zählers in Verbindung steht. Dieser Bereich trägt Sensorkomponenten, um ein bewegtes Magnetrad, welches auf dem zylindrischen Ansatz gelagert ist, abzutasten.

Ein Problem bei den bekannten Einrichtungen ist jedoch, dass die Sensorik Manipulationsversuchen ausgesetzt sein kann, welche das Ziel haben, die Zählung der abgenommenen Fluidmenge zu unterbinden oder zu verfälschen.

Aufgabe der Erfindung ist es daher, einen Fluidzähler zur Verfügung zu stellen, welcher eine zuverlässige und manipulationssichere elektronische Auswertung erlaubt und dennoch einfach und kostengünstig zu bauen ist.

Diese Aufgabe wird erfindungsgemäß gelöst durch eine Einrichtung mit den Merkmalen des Patentanspruchs 1.

Gemäß der Erfindung sind im Innern des Lagerkörpers wenigstens zwei richtungssensitive Magnetfeldsensoren zur Detektion eines Magnetfeldes des magnetischen Rotationskörpers angeordnet, deren Signale als Maß für die Rotation des Rotationskörpers und des Fluidstroms auswertbar sind, wobei die Magnetfeldsensoren in derselben Ebene angeordnet und zu einer gemeinsamen Raumachse ausgerichtet sind.

Die Verwendung von mehreren Magnetfeldsensoren ermöglicht Auswertungen, die weit über eine Redundanz der Messwerterfassung hinausgehen. Wie unten beschrieben wird, kann durch die Verwendung von zwei und mehr Sensoren eine Drehrichtungserkennung erreicht werden sowie eine ausgefeilte Prüfung auf Manipulationsversuche.

Wichtig ist, dass es sich bei den Sensoren um richtungsabhängige Magnetfeldsensoren handelt. Unter richtungssensitiven Magnetfeldsensoren werden hier solche Sensoren verstanden, die je nach ihrer Ausrichtung zum einwirkenden Magnetfeld unterschiedliche Signale liefern. Insbesondere können Hall-Sensoren verwendet werden. Eine Drehung eines solchen Sensors um 180°, senkrecht zu den Feldlinien, führt zu einer Umkehr des Vorzeichens beim ausgegebenen Signal. Also liefern derartige Sensoren ein Ausgangssignal welches davon abhängt, ob sie mit einer ausgewählten Fläche in Richtung des Nordpols oder des Südpols der Magnetfeldlinien orientiert werden. Im Gegensatz dazu liefern nicht-richtungssensitive Sensoren, z.B. magnetoresistive Sensoren, ein Signal als Maß für die Feldstärke, jedoch nicht für die Feldrichtung.

Durch dieses Merkmal der Anordnung mehrerer richtungssensitiver Sensoren ist eine äußerst präzise Auswertung der Signale der Sensoren möglich, insbesondere kann bei geeigneter Ausrichtung der Sensoren im Fluidzähler die Signalantwort der beiden Sensoren mittels Quadratur ausgewertet werden, wie unten weiter erläutert wird.

Die Sensoren sind in einer Ebene angeordnet und zu einer gemeinsamen Raumachse ausgerichtet. Dies ist so zu verstehen, dass die Sensoren entweder in dieselbe Raumrichtung orientiert sind oder um 180° zueinander gedreht orientiert sind, dass also ihre Detektionsflächen im Wesentlichen parallel zueinander verlaufen.

Diese besondere Anordnung hat, wie unten beschrieben wird, besondere Vorteile hinsichtlich der möglichen Auswertung der Signale. Außerdem ergeben sich zusätzlich Vorteile bei der Herstellung, da die Sensoren z.B. auf einer gemeinsamen Platine anzuordnen sind und so eine problemlose Montage der Sensoren auf einer ebenen Fläche möglich ist.

Die einfache Montage erlaubt in Kombination mit der Signalauswertung der mehreren Sensoren eine äußerst weitgehende Analyse der bereitgestellten Signale. Als Ergebnis dieser unten erläuterten deutlich verbesserten Auswertung kann die Abtastung der Sensoren mit verringerter Frequenz ausgeführt werden und auf diese Weise eine deutliche Energieeinsparung erzielt werden.

Bei dieser Anordnung wird bewusst von einer Anordnung von Sensoren zur Detektion von Magnetfeldern abgewichen, bei der die Sensoren für eine maximale Durchdringung durch ein Magnetfeld ausgerichtet werden, also möglichst senkrecht zu dem Feldlinienverlauf. Diese Ausrichtung würde einer Anordnung mit radial nach außen gerichteter Erfassungsrichtung um die Drehachse entsprechen. Die Sensoren sind gemäß der Erfindung nicht alle in radialer Richtung nach außen orientiert, sondern translatorisch in einer Ebene versetzt, jedoch in die gleiche Raumrichtung orientiert. Die erfindungsgemäße Anordnung führt zu einer Verkippung der Sensoren gegen die radial von der Drehachse nach außen verlaufende Richtung, erleichtert dadurch jedoch die Herstellung massiv und führt außerdem zu einer verfeinerten Auswertemöglichkeit. Werden mehr als zwei Sensoren verwendet, können diese alle auf einer Ebene angeordnet werden, es können jedoch beispielweise auch Sensoren auf der Rückseite der Platine angeordnet werden.

Die Sensoren können gemäß der Erfindung im fluiddurchströmten Innenraum oder auch im getrennten Außenraum angeordnet sein. Im ersten Fall ist eine fluiddichte und gesicherte Kabelzuführung für die Sensoren vorzusehen. Dazu ist z.B. eine hitzebeständige Durchführung geeignet, wie sie von der Anmelderin in der EP2005548 offenbart wurde.

Vorzugsweise wird als Rotationskörper ein ringförmiger Magnetkörper verwendet, welcher entlang seines Umfangs wenigstens vier Magnetpole aufweist.

Die Verwendung eines Rotationskörpers mit mehr als zwei Magnetpolen ermöglicht eine genauere Auswertung der Drehbewegung sowie auch eine Richtungsfeststellung der Drehbewegung, wie weiter unten erläutert werden wird. Derartige Ringmagnete sind bekannt und handelsüblich erhältlich.

Die Zähleinrichtung ist so ausgebildet, dass sich die Magnetfeldsensoren auf gleicher axialer Höhe entlang der Drehachse des Rotationskörpers befinden, jedoch in Drehrichtung um einen Winkel um die Drehachse versetzt sind. Die Sensoren nehmen in diesem Fall das drehende Magnetfeld des Rotationskörpers auf gleicher Höhe war, jedoch in Verlauf eines Umlaufs zu unterschiedlichen Zeiten. Es ist also eine Phasenverschiebung zwischen den Signalen der Magnetfeldsensoren feststellbar und auswertbar.

In einer Ausführungsform der Erfindung sind die Magnetfeldsensoren in dieselbe Raumrichtung ausgerichtet und in Drehrichtung um einen Winkel von 90° versetzt.

Die Sensoren sind gemäß der Erfindung mit einer Auswerteschaltung oder einem Auswertemodul koppelbar. Diese Auswerteeinrichtung nimmt die Sensorsignale ab und wertet die zeitgleich vorliegenden Signale mehrerer Sensoren aus, um verschiedenen Informationen über die Zähleinrichtung zu ermitteln.

Insbesondere wertet die Auswerteeinrichtung die Vorzeichen der anliegenden Sensorsignale aus und bildet aus dieses Vorzeichenkombinationen eine Datenreihe mit beliebiger Länge. Anhand dieser Datenreihe kann die Drehrichtung des Rotationskörpers bestimmt werden (siehe unten) und außerdem eine stetige Drehung verifiziert werden. Folgt diese Datenreihe nämlich nicht einer vorgegebenen Folge, werden z.B. Signalkombinationen ausgelassen, kann dies auf eine Manipulation der Zähleinrichtung hinweisen.

Andererseits kann die Auswerteeinrichtung auch die Signale ihrer Signalgröße nach auswerten, wobei eine AD-Wandlung vorgenommen wird, bevor die Signale einer Auswertung zugeführt werden. Die Kombination der Signalgrößen bzw. die Summe der absoluten Signale oder z.B. deren Quadrate kann als Maß für die Wahrscheinlichkeit einer stattfindenden Manipulation ermittelt werden. Wird, wie es bekanntermaßen bereits vorgekommen ist, ein starker Magnet zur Beeinflussung der Einrichtung eingesetzt, führt dies bei der erfindungsgemäßen Einrichtung zu inkonsistenten Signalen der mehreren Sensoren. Die ausgewertete Summe der Signalquadrate wird durch ein starkes Magnetfeld erhöht und die Summe übersteigt einen zulässigen Wertebereich. Außerdem kann die Auswertung der Drehbewegung nicht mehr die vorgegeben Wertefolgen angeben, da bei einem ausreichend starken Magnetfeld das Feld des Rotationskörpers an den Sensoren soweit überlagert wird, dass wenigstens einer der Sensoren keine negativen oder positiven Werte in der vorgesehen Folge mehr einnehmen kann (siehe unten).

Die Erfindung wird nun anhand eines bevorzugten Ausführungsbeispiels erläutert, wobei Bezug auf die beiliegenden Figuren genommen wird.
Figur 1 zeigt eine teilgeschnittene Ansicht eines Teils einer erfindungsgemäßen Zähleinrichtung;
Figur 2 zeigt eine Sensoranordnung mit weichmagnetischem Material zum Einsatz in der Zähleinrichtung aus Figur 1;
Figur 3 zeigt eine Stirnansicht auf den Lagerkörper mit Rotationskörper mit Schnittlinien;
Figur 3A zeigt einen ersten Schnitt der Anordnung aus Figur 3;
Figur 3B zeigt einen zweiten Schnitt der Anordnung aus Figur 3;
Figur 4 zeigt in einer Prinzipskizze die Lage der Sensorik in der Sensoranordnung aus Figur 2;
Figur 5 zeigt einen beispielhaften Signalverlauf für die Sensorsignale der Anordnung aus Figur 4.

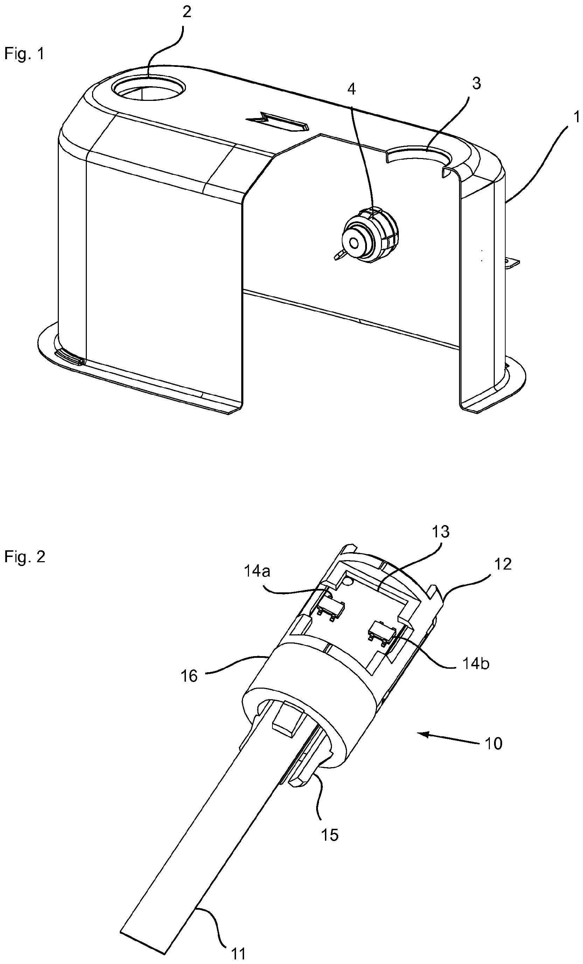

In Figur 1 ist ein Oberteil 1 eines Gaszählergehäuses gezeigt. Auf der Oberseite des Gehäuses sind ein Einlass 2 und Auslass 3 für das Gas gezeigt. Das Gaszählergehäuse wird durch diese Öffnungen 2, 3 vom Gas durchströmt, welches auf Verbraucherseite abgerufen wird. Die durch das Gehäuse strömende Gasmenge soll für eine Verbrauchsermittlung erfasst werden. Die für die Erfindung unwesentlichen Teile (z.B. Unterteil des Zählers, Zuleitungen, innere Mechanik etc.) sind aus Gründen der Übersichtlichkeit nicht dargestellt.

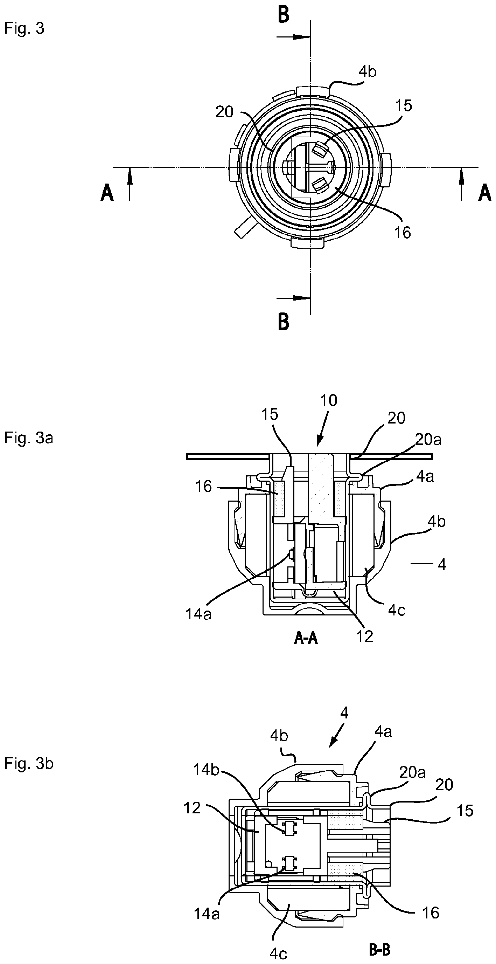

Das Gehäuse 1 ist durchbrochen dargestellt, um den Blick in den Innenraum zu ermöglichen. In dem Innenraum des Gehäuses 1 ist ein Rotationskörper 4 angeordnet, der auf einem Lagerkörper aufgesteckt ist. In Figur 1 verdeckt der Rotationskörper 4 den Lagerkörper. Der Lagerkörper ist als Einstülpung aus der Wandung des Gehäuses 1 ausgebildet und mit dieser Wandung durch Verpressen oder Verschweißen verbunden, wie weiter unten unter Bezug auf die Figuren 3, 3A und 3B beschrieben werden wird.

Im betriebsfähigen Zustand befinden sich in dem Gaszähler weitere Bauteile, welche die Bewegung eines Fluidstroms durch das Gehäuse in eine Drehbewegung des Rotationskörpers 4 überführen.

Der Rotationskörper 4 trägt einen Ringmagneten mit zwei Nord- und zwei Südpolen. Der Ringmagnet rotiert um den Lagerkörper, wobei auch das zwischen den Polen des Ringmagneten erzeugte Magnetfeld rotiert.

In dem Lagerkörper, also im Innenraum des Rotationskörpers 4 ist eine Sensoranordnung 10 eingebracht. Figur 2 zeigt die Sensoranordnung 10 in einer perspektivischen Darstellung. Die Sensoranordnung verfügt über eine Zuleitung 11, welche als Flachbandkabel ausgebildet ist. Eine Halterungsanordnung 12 ist aus Kunststoff gebildet und trägt eine Platine 13 auf welcher Hall-Sensoren 14a und 14b angeordnet sind. Die Hall-Sensoren 14a, 14b sind mit der Zuleitung 11 gekoppelt, so dass durch eine elektronische Auswerteschaltung außerhalb des Gehäuses, wohin das Flachbandkabel 11 geführt ist, die Signale der Sensoren ausgewertet werden können.

Die Halterungsanordnung 12 ist mit ihren äußeren Abmessungen so bemessen, dass es in die Ausstülpung in der Gehäusewandung, den Lagerkörper, von außen einführbar ist. Das Bauteil 12 liegt an der Innenwandung des Lagerkörpers an und stützt sich daran ab.

Das Bauteil 12 weißt außerdem flexible Rastmittel 15 auf, welche einen Stabilisierungskörper 16 aus weichmagnetischem Material halten und in axialer Richtung fixieren. Der Stabilisierungskörper 16 ist als Ringkörper ausgebildet, durch dessen inneren freien Ringraum das Kabel 11 in den Außenbereich des Gehäuses geführt ist.

Die gesamte Sensoranordnung 10 mit dem Stabilisierungskörper 16 wird in den Lagerkörper eingeführt, und zwar so, dass die Hall-Sensoren 14a, 14b sich im inneren Ringraum des Vier-Pol-Ringmagneten im Rotationskörper 4 befinden (siehe auch unten Fig. 3a und 3b). In axialer Richtung liegen die Sensoren 14a, 14b zu dem Gehäuseinnenraum orientiert während der Stabilisierungskörper 16 weiter in Richtung des Gehäuseaußenraums orientiert ist.

Die genaue Lage der verschiedenen Elemente zueinander wird aus den Figuren 3, 3A, 3B deutlicher.

Es ist aus Figur 2 weiterhin ersichtlich, dass die Sensoren 14a und 14b auf einer gemeinsamen Befestigungsebene montiert und kontaktiert sind sowie in dieselbe Raumrichtung orientiert sind. Die dargestellte Ausführungsform erlaubt eine besonders einfache Herstellung des sensiblen Detektionsmechanismus, der außerdem eine flexible und umfangreiche Auswertung ermöglicht, wie weiter unten beschrieben wird.

Figur 3 zeigt eine Aufsicht auf das System, bestehend aus Rotationskörper 4, Lagerkörper 20 und Sensoranordnung 10.

In Figur 3 sind die Schnittebenen A und B gekennzeichnet, die in Figur 3A (Schnittebene A-A) und Figur 3B (Schnittebene B-B) jeweils dargestellt sind.

Wie am besten in Figur 3A erkennbar, ist der Lagerkörper 20 aus einem einseitig geschlossenen Kreiszylinder mit Verdickung gebildet. An den Lagerkörper 20 schließt sich fluiddicht nach rechts und links die Wandung des Gehäuses 1 an, so dass der Lagerkörper 20 eine Einstülpung in die Gehäusewandung bildet und Außenraum vom Innenraum des Gaszählers trennt.

Auf der Außenseite des Lagerkörpers sitzt der Rotationskörper 4, der aus einem zweiteiligen Kunststoffgehäuse 4A, 4B und einem darin aufgenommenen Vier-Pol-Ringmagneten 4C gebildet ist. Der Rotationskörper 4 kann auf dem Lagerkörper 2 rotieren, sofern er von dem Fluidstrom und entsprechenden Übertragungsmitteln angetrieben wird.

Im Inneren des Lagerkörpers ist die Sensoranordnung 10 erkennbar. Der Kunststoffträger mit den Sensoren 14a und 14b erstreckt sich innerhalb des Lagerkörpers 20 in den Bereich, um welchen der Vier-Pol-Ringmagnet 4c umläuft. Der Stabilisierungskörper 16 aus weichmagnetischem Material ist in axialer Richtung versetzt im Innenraum des Lagerkörpers 20 angeordnet, jedoch ebenfalls teilweise innerhalb des inneren Ringraumes des Ringmagneten 4c. Durch die Magnetisierung des weichmagnetischen Materials 16 von dem Ringmagneten 4c wird der Rotationskörper 4 in axialer Richtung stabilisiert und an einem Herunterrutschen in den Innenraum des Gaszählers gehindert. Dennoch können die Sensoren 14a, 14b das rotierende Magnetfeld des Ringmagneten 4c detektieren, welches den Innenraum des Lagerkörpers 20 durchgreift. Der Lagerkörper 20 ist aus einem Edelstahl gebildet, welcher das Magnetfeld des Ringmagneten 4c weitgehend hindurchtreten lässt.

Wie in den Figuren 3A und 3B deutlich zu erkennen, sind die Hall-Sensoren 14a und 14b auf einer gemeinsamen Platine angeordnet und in dem Kunststoffträger 12 gehalten.

In axialer Richtung sind die Sensoren 14a und 14b auf gleicher Höhe montiert, so dass sie das magnetische Rotationsfeld bei einem Umlauf des Ringmagneten 4c mit Phasenverschiebung detektieren.

In dem Lagerkörper 20 ist ein Anschlag 20a ausgebildet, welcher eine Anlagefläche für den Rotationskörper 4 bildet. In Richtung des freien, verschlossenen Endes des Lagerkörpers 20 wird der Rotationskörper 4 durch die Wechselwirkung des Ringmagneten 4c mit dem weichmagnetischen Material 16 stabilisiert. Der Stabilisierungskörper 16 wird bei jeder Veränderung des äußeren Magnetfeldes ummagnetisiert, weist jedoch eine geringe Remanenz auf. Auf diese Weise wird die Drehbewegung des Rotationskörpers leicht bedämpft, was positive Auswirkungen auf das Laufverhalten des Rotationskörpers hat.

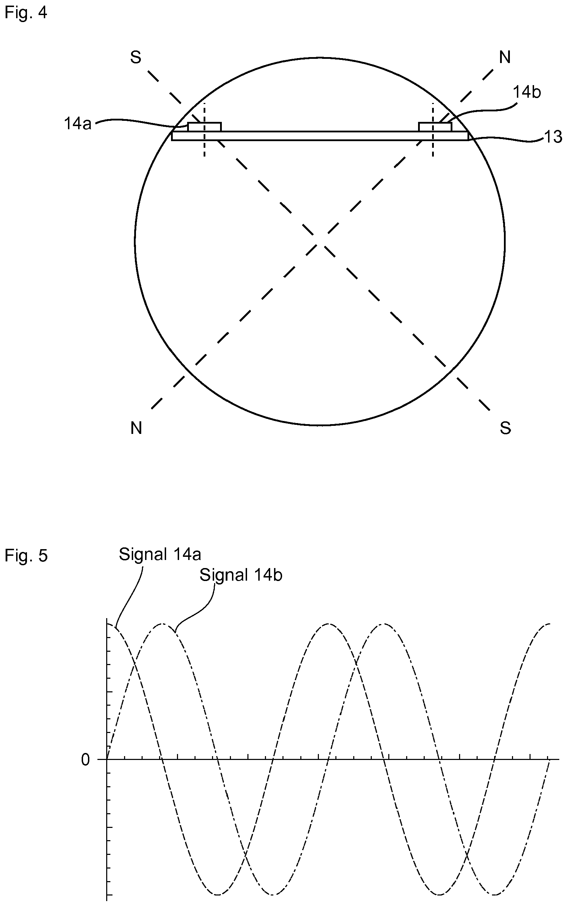

In Figur 4 ist die Anordnung der Sensoren im Magnetfeld schematisch dargestellt. Die Hall-Sensoren 14a und 14b sind so angeordnet, dass sie mit ihren ebenen Flächen in die gleiche Raumrichtung weisen und auf der flachen Leiterplatte 13 befestigt sind. Abstand und Verschiebung zur Rotationsachse des umlaufenden (nicht dargestellten) Rotationskörpers mit Ringmagneten sind so gewählt, dass die Hall-Sensoren in einem Winkel von 90°C, gemessen von der Rotationsachse aus, angeordnet sind. In Figur 4 sind dazu die beispielhaften Orientierungen der Magnetpole des umlaufenden Ringmagneten dargestellt sowie die Aufteilung der Kreisfläche in vier Quadranten.

Es ist unmittelbar ersichtlich, dass jeder der Sensoren 14a, 14b bei einem Umlauf des Ringmagneten von vier Polen passiert wird. Es ist dabei jedoch zu beachten, dass aufgrund der Anordnung der Hall-Sensoren 14a und 14b auf der Platine 13 eine weitere Phasenverschiebung der detektierten Magnetfelder erzeugt wird. Die Hall-Sensoren weisen nämlich mit ihren Detektionsachsen nicht in Richtung einer radialen Verbindungsgeraden vom Rotationszentrum zum Ringmagneten, sondern sind demgegenüber um einen Winkel von 45°C verkippt. Der Hall-Sensor 14a ist dabei von einer derartigen radialen Geraden vom Rotationszentrum zum Ringmagneten um 45°C nach rechts verkippt, der Sensor 14b hingegen um 45°C nach links. Daraus resultiert, dass die von den Hall-Sensoren detektierten Signale tatsächlich eine Phasenverschiebung von 90°C aufweisen.

Ein schematischer Signalverlauf der Signale der Sensoren ist in Figur 5 gezeigt, wobei die Signale des Sensors 14a und die Signale des Sensors 14b im Wesentlichen gleiche Amplituden bei einer Phasenverschiebung von 90°C aufweisen. Die Darstellung der Figur 5 zeigt einen kompletten Umlauf des Ringmagneten, wobei aufgrund der Vier-Pol-Eigenschaft des Ringmagneten zwei volle Signalzyklen erscheinen.

Außerdem ist gezeigt, dass die Hall-Sensoren im Wechsel positive und negative Spannungssignale zeigen, die von einer Auswerteschaltung ausgewertet werden. Die folgende Signalmatrix zeigt den zeitlichen Verlauf der Signale, wobei nur ausgewertet wird, ob die Signale ein positives oder negatives Vorzeichen aufweisen.

| | Quadrant 1 | | Quadrant 2 | | Quadrant 3 | | Quadrant 4 | |
|---|---|---|---|---|---|---|---|---|
| Signal von Sensor 14a | + | - | - | + | + | - | - | + |
| Signal von Sensor 14b | + | + | - | - | + | + | - | - |

In der Tabelle sind zeitgleiche Signalpaare der beiden Sensoren 14a, 14b übereinander dargestellt. Bei der Drehung des Rotationskörpers wechseln die Signalkombinationen. Im ersten Quadranten zeigt der Sensor 14a ein positives Signal, ebenso der Sensor 14b (++ in erster Signalspalte in Quadrant 1). Mit fortschreitender Drehung wird das Signal vom Sensor 14a negativ, das Signal von 14b bleibt positiv (-+ in zweiter Signalspalte in Quadrant 1). Mit weiterer Drehung werden beide Signale negativ (-- in dritter Signalspalte). Es wird deutlich, dass durch Auswertung eines Signalübergangs von einem Signalpaar zum folgenden Signalpaar unmittelbar bestimmt werden kann, in welche Richtung sich der Rotationskörper dreht, da die Signalwechsel eindeutig für die Drehrichtung sind.
Wird z.B. ein Übergang -+/-- detektiert, also in der obigen Tabelle nach rechts, zeigt dies eine erste Drehrichtung an. Ein Übergang -+/++ zeigt hingegen eine Drehung in die entgegengesetzte Richtung an.

Es ist bekannt, dass die Auswertung bezüglich eines positiven oder negativen Signals, also eher eine binäre bzw. qualitative Auswertung des Signals, mit deutlich robusterer und einfacherer Technik möglich ist als die Auswertung eines absoluten Signals. Die Auswertung der Drehbewegung ist daher besonders verlässlich, da die Signale von zwei Sensoren zusammen ausgewertet werden und gleichzeitig die Drehrichtung verifiziert werden kann. Die Manipulierbarkeit wird dabei deutlich verringert. Insbesondere kann die Folge von Signalübergängen auf Plausibilität überprüft werden, also z.B., ob jeder Quadrant tatsächlich komplett durchlaufen wird.

Der Schlüssel zum besonderen Vorteil dieser Ausführungsform liegt in der Auswertung von den Signalen von zwei Sensoren, die phasenverschoben von demselben Magnetfeld beeinflusst werden, und wobei die Signale gemeinsam ausgewertet werden.

Eine Abtastung der Hall-Sensoren findet in dieser bevorzugten Ausführungsform bei einigen 10Hz statt, zum Beispiel 32Hz. Wird von einer Drehgeschwindigkeit des Rotationskörpers von bis etwa 2Hz ausgegangen, finden die Polwechsel mit höchstens 8Hz statt, da vier Pole auf dem Magneten angeordnet sind. Bei gleichmäßiger Drehung würde jede der oben stehenden Signalkombinationen, von denen bei jedem Umlauf die tabellarisch gezeigten acht Kombinationen auftreten, sicher erfasst (acht Signalkombinationen treten 2 mal pro Sekunde auf, also Erfassung von sechzehn Signalkombinationen mit zeitlich gleichverteilten 32 Messungen).

Eine derartige Abtastrate hat besonders positive Auswirkungen auf den niedrigen Energieverbrauch der Einrichtung.

Zusätzlich können bei der erfindungsgemäßen Einrichtung auch die Analogsignale der beiden Sensoren ausgewertet werden. Es ist beispielsweise möglich, die Summe der Amplitudenquadrate der Sensorsignale zu bilden und zu prüfen, ob diese Summe der Amplitudenquadrate in einem Wertebereich liegt, welcher einen plausiblen Wertebereich wiedergibt.

Wird ein derartiger Zähler, beispielsweise durch das Nahebringen eines äußerst starken Magneten, einem Manipulationsversuch ausgesetzt, kann dieser üblicherweise detektiert werden. Die Signale der Hall-Sensoren werden so stark verändert, dass die Summe der Amplitudenquadrate aus dem zulässigen Korridor heraustritt. Außerdem erfasst die Auswerteschaltung bei einer hohen Amplitudenquadratsumme, dass keine Veränderung der Signale auftritt, also keine Drehbewegung stattfindet. Dies wäre dann der Fall, wenn durch das Magnetfeld die Signalantwort der Hall-Sensoren beispielsweise in dem positiven oder negativen Bereich verschoben wird, treten jedoch keine Plusminusübergänge mehr auf, registriert das Zählwerk keine Drehbewegung. Durch eine Plausibilitätskontrolle und Auswertung der Analogsignale einerseits und der Signalkombination andererseits ist damit eine Manipulationsdetektion möglich.

Die Erfindung ist selbstverständlich auch auf Einrichtungen mit mehr oder weniger Polen im Ringmagneten anwendbar bzw. auf Einrichtungen, welche nicht von einem Ringmagneten, sondern einer Mehrzahl von Einzelmagneten Gebrauch machen.

## Patentansprüche

1. Zähleinrichtung für Fluidströme, mit einem Gehäuse (1), dessen Inneres vom Fluid durchströmbar ist, wobei in einer Gehäusewandung eine Einstülpung in das Gehäuseinnere ausgebildet ist, welche wenigstens abschnittsweise als Lagerkörper (20) geformt ist und
mit einem magnetischen Rotationskörper (4), welcher im Gehäuseinnern auf dem Lagerkörper drehbar gelagert ist und durch einen Fluidstrom zur Rotation auf dem Lagerkörper antreibbar ist,
**dadurch gekennzeichnet,**
**dass** im Innern des Lagerkörpers (20) wenigstens zwei richtungssensitive Magnetfeldsensoren (14a, 14b) zur Detektion eines Magnetfeldes des auf dem Lagerkörper umlaufenden magnetischen Rotationskörpers (4) angeordnet sind, deren Signale als Maß für die Rotation des Rotationskörpers und des Fluidstroms auswertbar sind,
wobei die Magnetfeldsensoren auf gleicher axialer Höhe entlang der Drehachse des Rotationskörpers, in Drehrichtung um einen Winkel um die Drehachse versetzt und in derselben Ebene angeordnet, in dieser Ebene translatorisch versetzt und in die gleiche Raumrichtung orientiert sind.

2. Zähleinrichtung nach Anspruch 1, wobei der Rotationskörper einen ringförmigen Magnetkörper aufweist, der entlang seines Umfangs wenigstens vier Magnetpole aufweist.

3. Zähleinrichtung nach einem der vorstehenden Ansprüche, wobei die richtungssensitiven Magnetfeldsensoren Hall-Sensoren sind.

4. Zähleinrichtung nach einem der vorstehenden Ansprüche, wobei die richtungssensitiven Magnetfeldsensoren mit identischer Orientierung zu der gemeinsamen Raumachse ausgerichtet sind, so dass sie für in einer Richtung entlang dieser Raumachse verlaufende Magnetfeldlinien Signale gleichen Vorzeichens erzeugen.

5. Zähleinrichtung nach einem der vorstehenden Ansprüche 1 bis 3, wobei die richtungssensitiven Magnetfeldsensoren mit entgegengesetzter, also um 180° gedrehter Orientierung zu der gemeinsamen Raumachse ausgerichtet sind, so dass sie für in einer Richtung entlang dieser Raumachse verlaufende Magnetfeldlinien Signale entgegengesetzten Vorzeichens erzeugen.

6. Zähleinrichtung nach Anspruch 4 oder 5, wobei zwei Magnetfeldsensoren mit Ihren Mittelpunkten in Drehrichtung um einen Winkel von 90° versetzt sind.

7. Zähleinrichtung nach einem der vorstehenden Ansprüche, wobei wenigstens einer der Magnetfeldsensoren im fluiddurchströmten Gehäuseinnern angeordnet ist und eine fluiddichte Kabeldurchführung für Signalleitungen des Sensors vorgesehen ist.

8. Zähleinrichtung nach einem der vorstehenden Ansprüche, wobei wenigstens drei Magnetfeldsensoren in der Zähleinrichtung angeordnet sind.

## Claims

1. A metering device for fluid flows having a housing (1), the inside of which can be flowed through by fluid, wherein an inversion into the inside of the housing is configured in a housing wall, which inversion is formed at least sectionally as a bearing body (20), and
with a magnetic rotating body (4) which is rotatably mounted in the inside of the housing on the bearing body and can be driven by a fluid flow for rotation on the bearing body,
**characterized in that**
inside the bearing body (20) at least two directionally sensitive magnetic field sensors (14a, 14b) are arranged for detecting a magnetic field of the magnetic rotating body (4) on the bearing body, signals whereof can be evaluated as a measure of the rotation of the rotational body and of the fluid flow,
wherein the magnetic field sensors are arranged at the same axial height along the rotational axis of the rotational body, displaced by an angle about the axis of rotation in the rotational direction and in the same plane, are displaced in a translatory manner in this plane and oriented in the same spatial direction.

2. The metering device according to claim 1, wherein the rotational body has an annular magnetic body which has at least four magnetic poles along its periphery.

3. The metering device according to one of the preceding claims, wherein the directionally sensitive magnetic field sensors are Hall sensors.

4. The metering device according to one of the preceding claims, wherein the directionally sensitive magnetic field sensors are oriented with an identical orientation to the common spatial axis, so that for magnetic field lines running in a direction along this spatial axis they produce signals with the same sign.

5. The metering device according to one of the preceding claims 1 to 3,
wherein the directionally sensitive magnetic field sensors are equipped with an opposing spatial axis, in other words with an orientation turned about 180°, so that they produce signals with opposite signs for magnetic field lines running in a direction along this spatial axis.

6. The metering device according to claim 4 or 5, wherein two magnetic field sensors are displaced with their centre points in the rotational direction by an angle of 90°.

7. The metering device according to one of the preceding claims, wherein at least one of the magnetic field sensors is arranged in the inside of the housing through which fluid flows and a fluid-tight cable bushing is provided for signal lines of the sensor.

8. The metering device according to one of the preceding claims, wherein at least three magnetic field sensors are arranged in the metering device.

## Revendications

1. Compteur pour débits de fluide avec un boîtier (1) dont l'intérieur peut être traversé par un fluide, une embouchure étant constituée dans une paroi du boîtier, laquelle est formée au moins par section comme un corps de palier (20) et avec un corps de rotation magnétique (4), lequel est logé pouvant tourner sur le corps de palier à l'intérieur du boîtier et pouvant être entraîné par un débit de fluide pour rotation sur le corps de palier, **caractérisé en ce qu'**à l'intérieur du corps de palier (20) sont disposés au moins deux capteurs de champ magnétique (14a,14b) sensibles à la direction pour détecter un champ magnétique du corps de rotation magnétique (4) tournant sur le corps de palier, dont les signaux peuvent être exploités comme mesure pour la rotation du corps de rotation, les capteurs de champ magnétique étant déportés d'un angle autour de l'axe de rotation, à la même hauteur axiale le long de l'axe de rotation du corps de rotation et disposés dans le même plan, décalés de manière translatoire dans ce plan et étant orientés dans la même direction spatiale.

2. Compteur selon la revendication 1, le corps de rotation comportant un corps magnétique de forme annulaire qui comporte au moins quatre pôles magnétiques le long de sa périphérie.

3. Compteur selon l'une quelconque des revendications précédentes, les capteurs de champ magnétique sensibles à la direction étant des capteurs de Hall.

4. Compteur selon l'une quelconque des revendications précédentes, les capteurs de champ magnétique sensibles à la direction étant orientés avec une orientation identique par rapport à l'axe spatial commun de telle manière qu'ils produisent des signaux de même signe pour des lignes de champ magnétique passant dans une direction le long de cet axe spatial.

5. Système de comptage selon l'une quelconque des revendications précédentes 1 à 3, les capteurs de champ magnétique sensibles à la direction étant orientés avec une orientation opposée, donc tournée de 180° par rapport à l'axe spatial commun de telle manière qu'ils produisent des signaux de signe opposé pour des lignes de champ magnétique passant dans une direction le long de cet axe spatial.

6. Compteur selon la revendication 4 ou 5, deux capteurs de champ magnétique étant décalés d'un angle de 90° avec leurs centres dans le sens de la rotation.

7. Compteur selon l'une quelconque des revendications précédentes, au moins un des capteurs de champ magnétique étant disposé à l'intérieur du boîtier traversé par le fluide et un passage de câbles étanche au fluide étant prévu pour les câbles de signaux du capteur.

8. Compteur selon l'une quelconque des revendications précédentes, au moins trois capteurs de champ magnétique étant disposés dans le compteur.
